# EUROPEAN PATENT SPECIFICATION

(11) **EP 1 506 356 B1**
(45) Date of publication and mention of the grant of the patent: **12.01.2011**
(21) Application number: 03723520.7
(22) Date of filing: 29.04.2003
(51) Int. Cl.: F16H 7/06, F16H 7/18, F16G 13/06

(54) **CHAIN TRANSMISSION**
KETTENTRIEB
TRANSMISSION PAR CHAINE

(30) Priority: 03.05.2002 NL 1020535
(43) Date of publication of application: 16.02.2005
(73) Proprietor: Korse, Theodorus Henricus Johannes Carolina, 2724 CJ Zoetermeer (NL)
(72) Inventor: Korse, Theodorus Henricus Johannes Carolina, 2724 CJ Zoetermeer (NL)
(74) Representative: Uittenbogaart, Gustaaf Adolf
(86) International application number: PCT/NL2003/000317
(87) International publication number: WO 2003/093700

(56) References cited:
- EP-A- 0 291 110
- EP-A- 0 492 404
- EP-A- 0 778 428
- EP-A- 1 184 593
- DE-A- 19 543 287
- DE-B- 1 030 122
- PATENT ABSTRACTS OF JAPAN vol. 010, no. 381 (M-547), 19 December 1986 (1986-12-19) -& JP 61 171942 A (DAIDO KOGYO CO LTD), 2 August 1986 (1986-08-02)

## Description

The invention relates to a chain transmission in accordance with the preamble of claim 1. A chain transmission of this type is known from WO 97/31846 or from DE 10 30 122 B, which constitutes the closest prior art. Chain transmissions are in widespread use in mechanical engineering for the slip-free transmission of rotation, for example when driving a camshaft of an internal combustion engine.

There are numerous designs of chain transmission. The chain transmission is usually designed with an endless chain which rotates about at least two sprocket wheels, while if appropriate a chain tensioner may be fitted in order to tension the chain around the sprocket wheels.

The links of the chain may be formed in numerous ways but usually comprise a row of link plates which are connected in series with the aid of pivot pins. Often, each link comprises at least two link plates which are connected in parallel and are each provided with openings which are positioned at a distance from one another in the longitudinal direction of the chain and are connected with the aid of pivot pins which extend transversely with respect to the longitudinal direction of the chain. The link plates are in this case positioned with a certain distance between them, so that a drive chamber, in which a tooth of the sprocket wheel can be received, is formed between the link plates and the pivot pins. In this case, the chain often comprises a series connection of inner links and outer links, the link plates of the outer links in each case enclosing the link plates of the inner links on the pivot pins. In the case of a bush chain, the link plates of the inner link are connected to one another by means of two bushes and the link plates of the outer link are connected to one another by means of pins which are mounted pivotably in the bushes of the inner links. In a so-called roller chain the wear between the tooth flank of the sprocket wheel and the bush, is reduced by fitting a roller around the bush.

Like a gear transmission, a chain transmission can be used to produce a defined nominal constant transmission ratio. This is the ratio between the rotational speed of the driven sprocket wheel and that of the driving sprocket wheel. The advantage of a chain transmission over a gear transmission is that its cost price is relatively low.

However, one drawback of the chain transmission is that the instantaneous transmission ratio is not constant. This is caused by the fact that the chain is composed of links which are positioned around the sprocket wheel as chords, and where the chain pulls the sprocket wheel with a fluctuating radius. This effect, known to the person skilled in the art as the polygon effect, leads when the wheel has a constant speed to speed fluctuations and vibrations in the chain which cause a fluctuating transmission ratio and a relatively high noise level. The polygon effect is most disruptive in sprocket wheels with a relatively small number of teeth, for example fewer than 20 teeth.

To counteract the polygon effect, it is proposed in WO 97/31846 to guide the chain with the aid of a guide path, which is arranged in the vicinity of the sprocket wheel, by interaction with parts of the chain along an engagement section. With the aid of the guide path which is arranged in a fixed position, the chain is guided along the sprocket wheel before, during and after engagement. In this case the chain is guided in such a manner that the pivot axes of the pins of the chain describe a predetermined, curved and virtually smooth path with respect to the outside world, in such a manner that the speed of a pivot axis of a pin at a certain distance from the sprocket wheel is always at a constant value when the wheel is rotating at a constant speed. The transmission ratio is then completely constant. In this curved path, the radius of curvature of the curved path is reduced virtually continuously along the engagement section from virtually infinite on a straight section of the curved path to the radius of the pitch circle of the sprocket wheel. In particular, the curved path approaches the pitch circle of the teeth of the sprocket wheel from the outside via a curved path section.

A drawback of the known chain drive is that as it is passing over the curved path, the chain links pivot ever further with respect to one another, with the result that the contact force between the chain and the guide path increases continuously. The Hertzian contact stress of the instantaneous point of contact on the guide path in the process increases accordingly. If high mechanical powers are to be transmitted and if the rotational speeds are high, the Hertzian contact stress may become unacceptably high. At higher powers and rotational speeds, the wear to the chain and guide path may as a result be so high that the service life of the chain and the guide path is unacceptably short. Moreover, mechanical friction losses occur and additional noise is generated, which is disadvantageous.

It is an object of the invention to provide a chain transmission of the type described in the introduction in which the abovementioned drawbacks are avoided while the advantages mentioned are retained. To this end, a chain transmission according to the invention is designed in accordance with claim 1. The result of this is that the pivot axes follow the path which is desired in order to obtain a constant instantaneous transmission ratio while there is little or no relative displacement between the support means of the chain and the rotating support which interacts therewith, so that wear and noise are avoided.

According to an embodiment, the chain transmission is designed in accordance with claim 2. This makes it easy to make a stable support for the links.

According to a further embodiment, the chain transmission is designed in accordance with claim 3. In this way, the path of the chain is defined with more accuracy, the polygon effect then being avoided as far as possible.

According to a further embodiment, the chain transmission is designed in accordance with claim 4. This makes it easy to obtain guidance for the chain in such a manner that the polygon effect is avoided.

According to a further embodiment, the chain transmission is designed in accordance with claim 5. The result of this is that the links are supported without interruption when they approach the wheel and the links are prevented from colliding with the wheel, so that wear and excess noise pollution are limited.

It should be noted that the support means referred to above are most effective in the vicinity of a wheel with a relatively small number of teeth (for example 16 teeth or fewer), since this is when the vibrations resulting from the polygon effect are greatest. This means that in a chain transmission with a small wheel and a large wheel (for example a camshaft drive of an internal combustion engine), the stationary guide means can be omitted in the vicinity of the large wheel. The mass inertia of the chain and the chain tension then form the means which ensure that the pivot axes follow the straight part of the curved path.

According to a further embodiment, the chain transmission is designed in accordance with claim 6. This facilitates positioning in the direction of rotation of the chain with respect to the wheel, while avoiding the use of teeth of a sprocket wheel positioned between the links and allowing the diameters of the sliding surfaces of the bearings in the pivots of the chain to be larger. This reduces the wear to the chain.

According to a further embodiment, the chain transmission is designed in accordance with claim 7. The result of this is that the driver means can function independently of the support means, so that they can be optimized independently of one another.

According to a further embodiment, the chain transmission is designed in accordance with claim 8. This further simplifies the design of the chain and the wheel, making it possible to provide the sides or the center part of the cylindrical wall of the wheel with tongues or grooves. By designing the sides as a separate component, it is possible for either the sides or the center part to be provided with tongues or grooves, which saves on manufacturing costs.

According to a further embodiment, the chain transmission is designed in accordance with claim 9. This results in a chain which is simple to produce. According to an embodiment the chain transmission is designed in accordance with claim 10. A chain transmission of this type is suitable for use with a chain which has to be guided around a wheel while only a force is transmitted by the chain but no torque is exerted on the wheel. In this transmission too, vibrations and the like are avoided, since the polygon effect does not occur.

The invention will be explained in more detail on the basis of a number of exemplary embodiments which are illustrated in a drawing, in which:
Fig. 1A and 1B diagrammatically depict curved paths of a chain transmission with a transmission ratio which is respectively equal to 1 and not equal to 1.
Fig. 2A and 2B respectively show a diagrammatic side view and a plan view of a first exemplary embodiment of a chain;
Fig. 3 diagrammatically depicts the curved path of a link which is changing from a rectilinear motion to a rotating motion;
Fig. 4A-E diagrammatically depict the interaction of the links of the chain with stationary and rotating support means in successive steps;
Fig. 5 shows a second embodiment of the links of the chain;
Figs. 6-11 each show a further embodiment of the chain transmissions in which a chain interacts with a sprocket wheel provided with teeth; and
Fig. 12 shows a simple embodiment of a chain.

It should be noted that the figures are purely diagrammatic illustrations of preferred embodiments of the invention which are given purely by way of non-limiting examples. In the figures, identical or corresponding components are denoted by identical reference symbols.

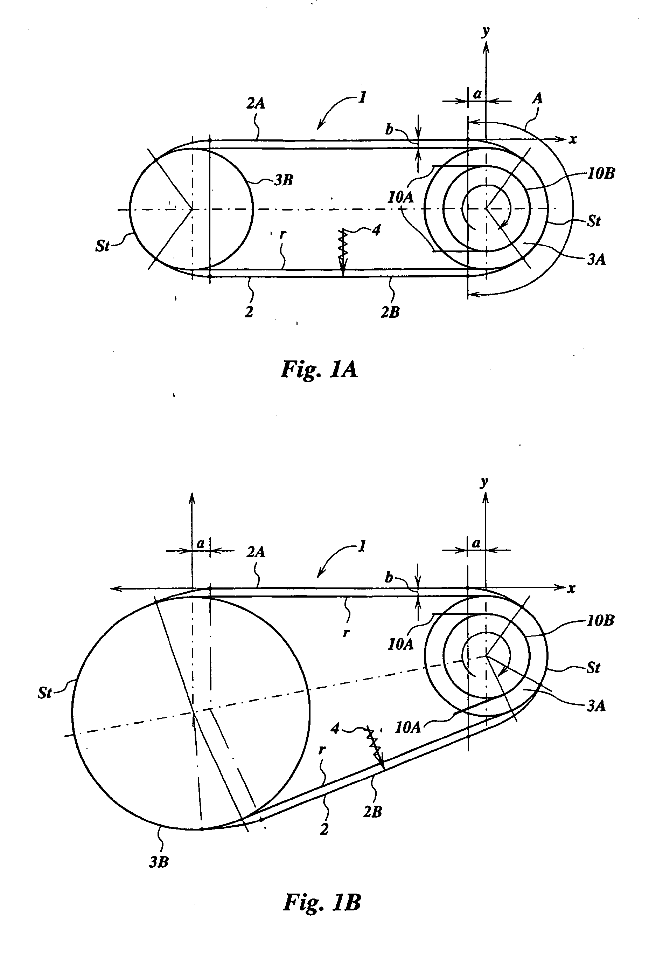

Referring first of all to Fig. 1A, this figure illustrates a chain transmission 1 with an endless chain 2 which rotates about two sprocket wheels 3A and 3B. The sprocket wheels 3A and 3B are arranged rotatably and are provided at their circumference with teeth which, during use, interact over an engagement section with successive links 5 of chain 2'. The engagement section around sprocket wheel 3A is denoted overall by A in Figure 1. The sprocket wheel 3A in this case forms a driving sprocket wheel, while sprocket wheel 3B forms a driven sprocket wheel. The transmission ratio between the sprocket wheels 3A and 3B is independent of the rotational position of the sprocket wheels 3. In this exemplary embodiment, a transmission ratio of 1 has been selected, but referring to Fig. 1B it will be clear that this ratio may also be selected to be other than 1. The top part 2A of the chain is under tensile load, while the nominally load-free bottom part 2B is tensioned with the aid of a chain tensioner 4.

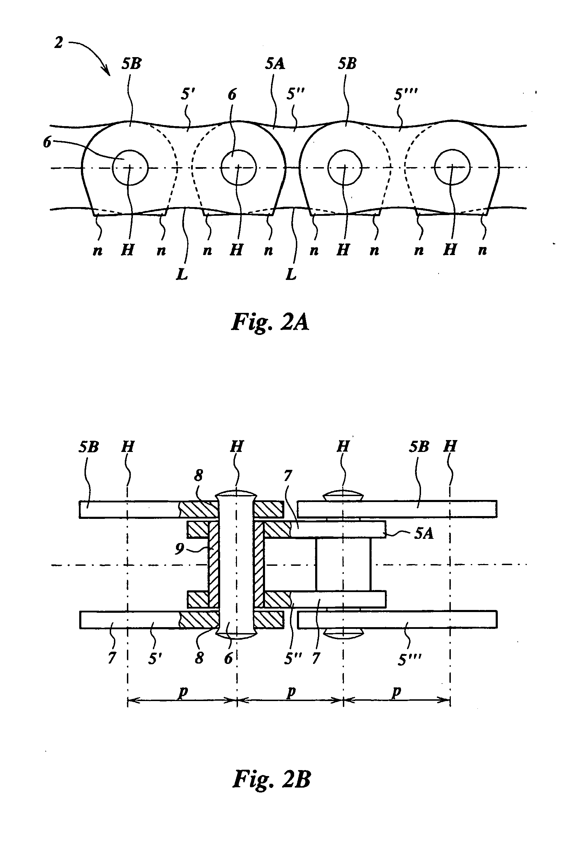

Referring now to Fig. 2A, 2B, the chain 2 is composed of a series of successive links 5, 5', 5" which are each pivotably connected to one another with the aid of pins 6. The links 5 of the chain 2 in this exemplary embodiment in each case comprise two link plates 7 extending in the longitudinal direction of the chain. The link plates 7 are each provided with two pivot holes 8 which are positioned at a distance from one another in the longitudinal direction of the link plate 7, have a center axis H and in which successive pins 6 of the chain 2 are accommodated. The distance between the center axes H of the pivot holes 8 and the two pins 6 of a link 5 which form the hinge for successive links 5 to move with respect to one another is the pitch p of the chain 2. The link plates 7 are each provided, in the vicinity of one of the two long sides L, with two support surfaces n which are each located in the vicinity of one end of the link plate 7. The chain 2 is composed of inner links 5A, the link plates 7 of which are connected to the center axis H with the aid of a hollow bush 9, and outer links 5B, the link plates 7 of which enclose the link plates 7 of the inner links 5A and are connected by means of pivot pins 6. It should be noted that in this context a link 5 is in each case formed by at least one link plate 7 and that in the bush chain shown in this example the inner links 5A each comprise two link plates 7 and two bushes 9, while the outer links 5B each comprise two link plates 7 and two pins 6.

The chain transmission 1 also comprises a guide 10A or 10B which is arranged in the vicinity of the sprocket wheel 3A and/or 3B (cf. Figure 1) for guiding the links 5 of the chain 2 by interaction with support surfaces n of the link plate 7 in the vicinity of and along at least a part of the engagement section A.

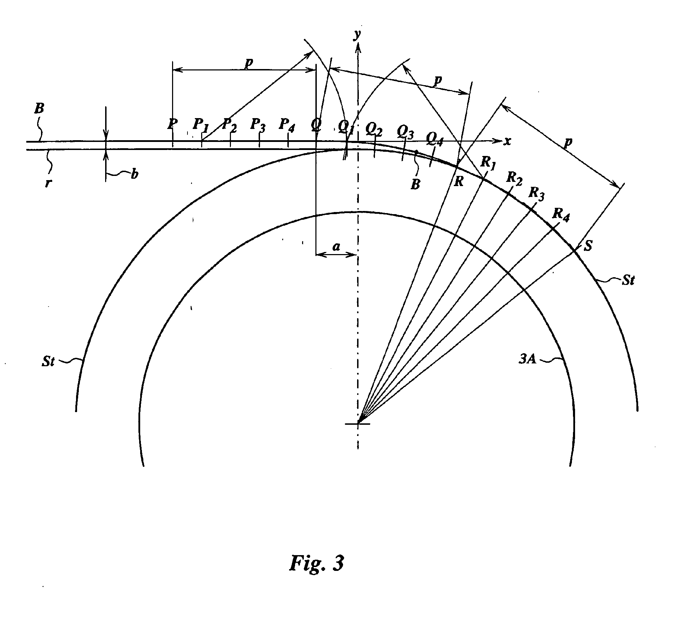

Referring to Figure 3, the drawing illustrates a curved path B which is followed by the center axes H, inter alia under the influence of the guides 10A and 10B. To counteract the polygon effect, the curved path B in the region between the wheels 3A and 3B comprises a straight section, on which the points P, P₁ to P₄ and Q are shown, a circular section St, on which the points R, R₁ to R₄ and S are shown, and between these a central section with a curvature which is tangent to both the straight part and the circular part and on which the points Q, Q₁ to Q₄ and R are shown. The circular part St corresponds to the circle which the two center axes H of link 5 describe when the link 5 is resting completely against the sprocket wheel 3A. Figure 3 shows an x-y co-ordinate system. The x axis is selected in such a way that it coincides with the straight section of the curved path B. It should be noted that the x axis lies a distance b outside a rectilinear part of a contour which is described by two pitch circles of teeth of the two interacting sprocket wheels 3A and 3B and two connecting lines r which are tangent on these two pitch circles. The y axis, which is perpendicular to the x axis, is selected in such a way that it passes through the center point of the pitch circle St of the teeth of the sprocket wheel 3A. Selecting the position of the point Q defines the shape of the central section of the curved path B. The point Q lies on the x axis and is at a distance a from the y axis and a distance b from the connecting line r. If a and b are selected appropriately, the result is a curve which is tangent with a continuously changing radius of curvature on both the straight part of the curved path B and the circular part of the curved path B. If appropriate, b may be selected to be equal to 0 or negative.

The shape of the central section of the curved path B determines the occurrence or absence of the polygon effect. To calculate the curved path B such that no polygon effect occurs, the starting point is the position of the point Q. The point R lies at the pitch spacing p from the point Q on the pitch circle St, and the point S lies at the pitch spacing p from the point R on the pitch circle St. The spacing between P and Q is likewise the pitch spacing p. The straight line P-Q is divided into equal parts by points P₁-P₄, in the example shown into five parts, and the arc R-S is divided into the same number of equal parts by the points R₁-R₄. The points Q₁-Q₄ which lie on the central section of the curved path B are at the pitch spacing p from the respective points P₁-P₄ and R₁-R₄ and can now be constructed. The entire curved path B can be constructed in a similar way.

It should be noted that the curved path B illustrated in Figure 3 is formed in part by a stationary guide 10A, arranged in the vicinity of the sprocket wheel 3A, for guiding the links 5 of the chain 2 towards and along an entry part of the engagement section A. It should be clear on the basis of Figure 1 that with the aid of the stationary guide 10A arranged in the vicinity of the sprocket wheel 3A, the links 5 can also be guided along an exit part of the engagement section A and away from the engagement section. The remaining part of the curved path B is formed by the links 5 being supported on a guide 10B which rotates with the sprocket wheel 3A, as shown below.

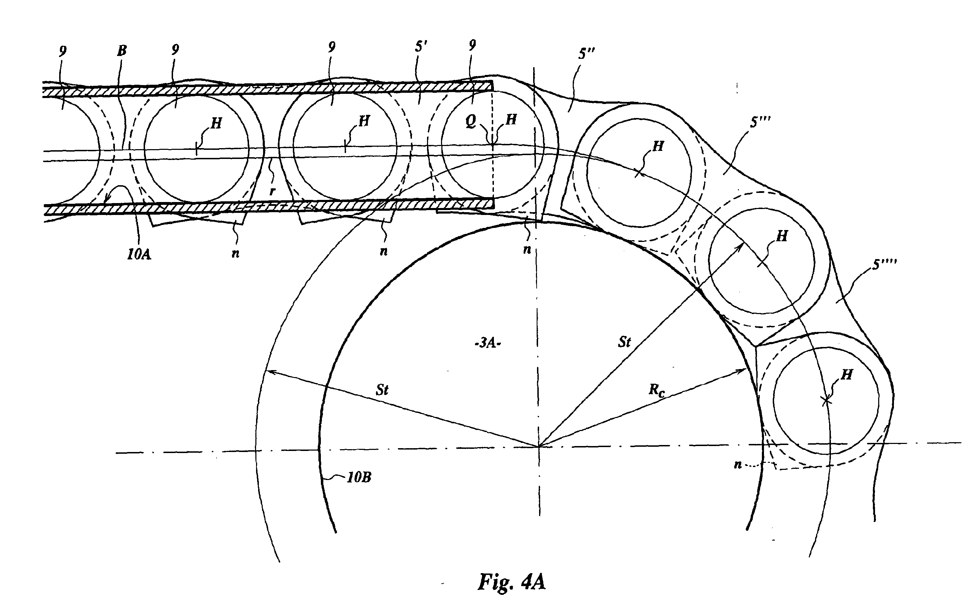

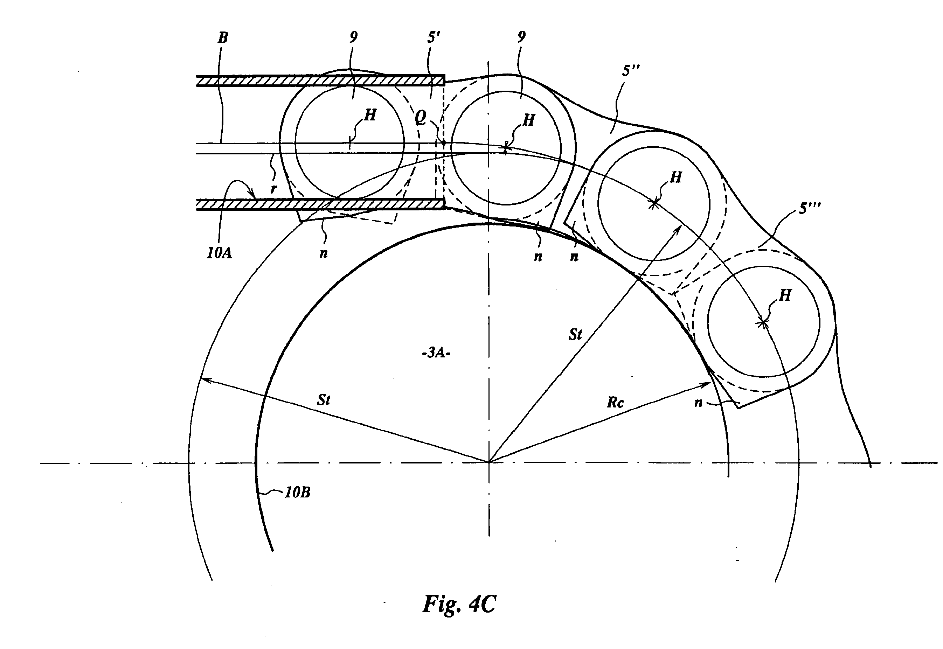

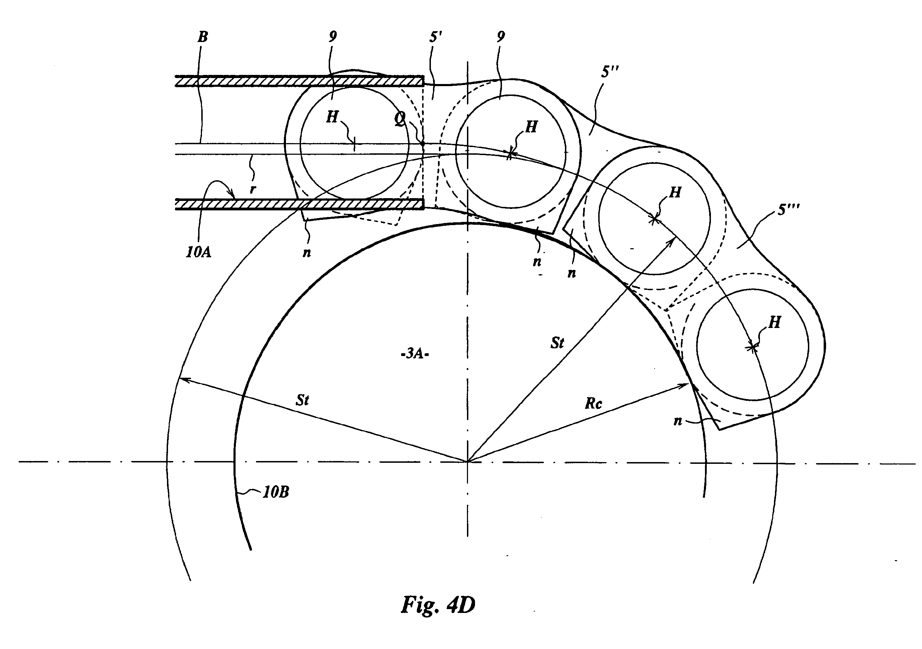

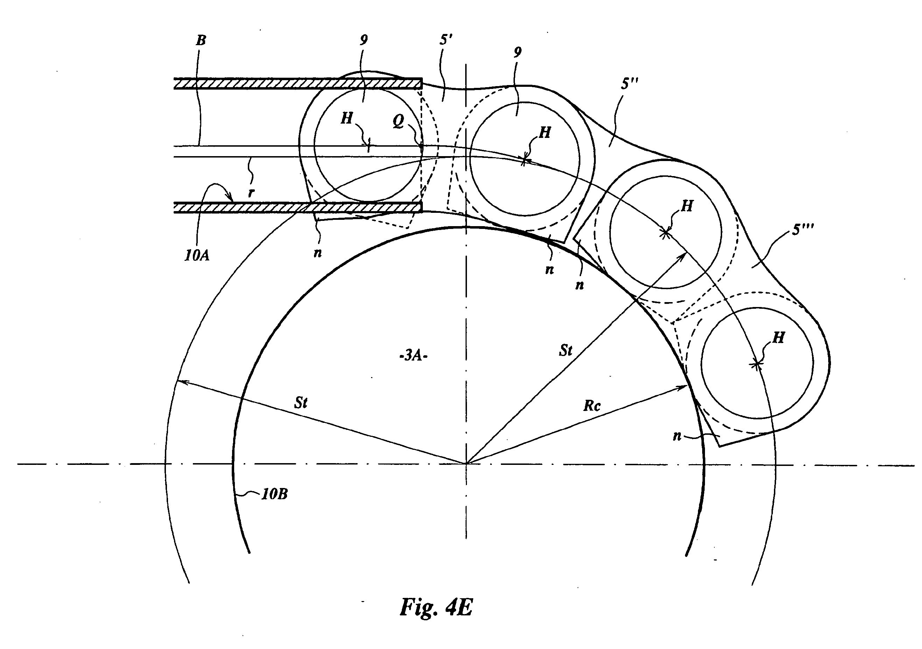

Referring now to Figures 4A to 4E, these figures present a detailed illustration of the guide according to the invention, showing how the links 5 are guided towards and along at least a part of the engagement section A, in such a manner that the center axes H follow the curved path B. The successive figures diagrammatically depict the situation in which the link 5 is moving from the left to the right and is continuously engaging to a greater extent on the sprocket wheel 3A. The teeth of the sprocket wheel 3A are not shown for the sake of clarity. The guide 10 comprises a fixed first part 10A and a rotatable second part 10B. There is a transition between the fixed first part 10A and the rotating second part 10B of the guide 10. The links 5 each comprise at least two guide surfaces which, in order to bridge this transition, are for a brief time simultaneously supported on the different guides 10A and 10B. The first guide surface of each link 5 is in this exemplary embodiment formed by the front bush 9, while the second guide surface is formed by the front support surface n on the underside of the link 5 which is lengthened at the ends of the underside. The first stationary part 10A of the guide 10 is designed as a straight guide and interacts with the bush 9. The second part 10B of the guide is in this exemplary embodiment designed as a rotating cylindrical guide surface which is arranged in the vicinity of the teeth on the sprocket wheel 3A and has a radius R_{c} which is smaller than the radius of the circle arc St. The second part of the guide 10B interacts with the support surface n. The figures, analogously to Fig. 3, show the path which the center axes H of the pins pass through when they are being guided towards and along a part of the engagement section A.

Figure 4A shows how the front bush 9 of the link 5', the center axis H of which is in position Q of the curved path B, is supported on the stationary guide 10A and also how the front support surface n is supported on the rotating guide 10B. As the link 5' moves further to the right, it will no longer be supported at the front by the stationary guide 10A. However, since the link 5' continues to be supported by support surface n on the rotating guide 10B, the front center axis H of link 5' will continue to follow the curved path B.

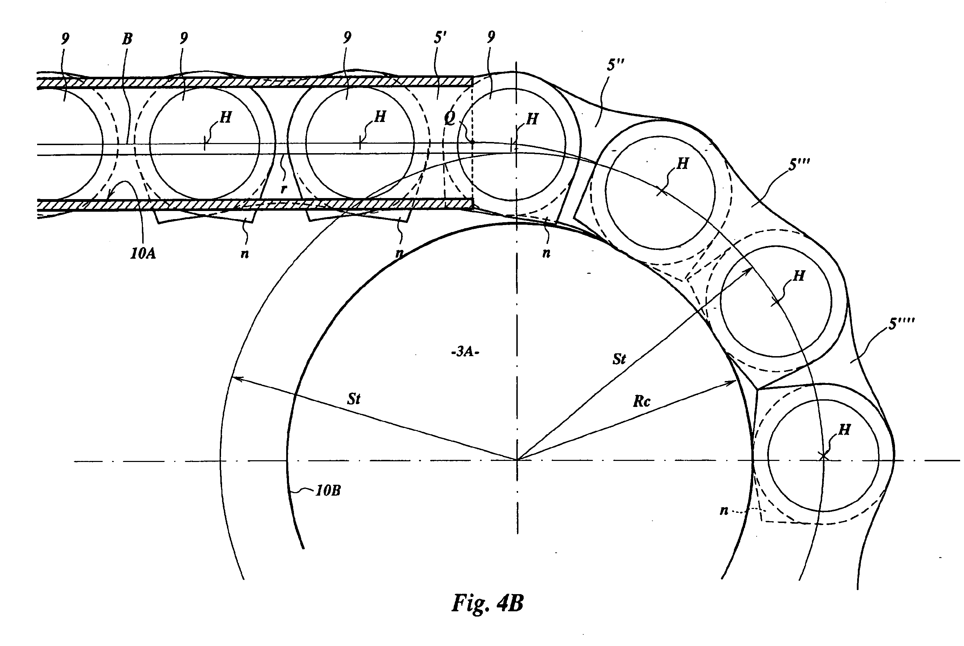

Figures 4B-4E show how the front support surface n of the link 5', during further displacement of the link 5', continues to be supported by the rotating guide 10B. In this case, the front center axis H moves ever further toward the center of the sprocket wheel 3A until the link 5' is bearing in full contact against it and both center axes H of the link 5' are moving along the circle arc St. The link 5' then rotates only about the center of the sprocket wheel 3A. It will be clear that the shape of the support surface n is the crucial factor in determining the path of the center axes H, and conversely that the shape of the support surface n is determined by the curved path B and the radius R_{c} of the cylindrical rotating guide 10B. The size of the support surface n is determined by the maximum permissible length of the link 5. The maximum length of the link 5 is dependent on the minimum number of teeth of the wheel 3A with which the chain 2 has to be able to interact. If there is a smaller number of teeth, the angle about which the links 5 have to be able to rotate with respect to one another about pivot axis H is greater, so that the links have to be shorter in order to prevent the successive links 5 from colliding with one another.

The curved path B is theoretically dependent on the radius of the circle arc St and therefore also on the number of teeth on the wheel. This means that the shape of the support surface n is also dependent on the number of teeth on the wheel and that the polygon effect can only be completely eliminated if a chain is used for wheels having the same number of teeth. In practice, it has been found that the polygon effect occurs in particular with wheels with a smaller number of teeth and that the shape of the support surface n scarcely differs for wheels with a larger number of teeth. As a result of the support surfaces n of the chain 2 being designed for the smallest possible wheels, it will be ensured that no polygon effect will occur with larger wheels. If appropriate, the straight guide 10A may even be omitted.

It should be noted that there are conditions which require for chains 2 to have the pitch p of an inner link 5A to differ from the pitch p of an outer link 5B. It will be clear to the person skilled in the art that the successive center axes H of the hinges then have to pass through two different curved paths B. This is achieved by designing the support surfaces n of the inner links 5A and the outer links 5B differently in these cases. In practice, in most cases it has been found that for a limited difference in the pitch p of the inner link 5A and the outer link 5B, the difference in the support surfaces n is negligible.

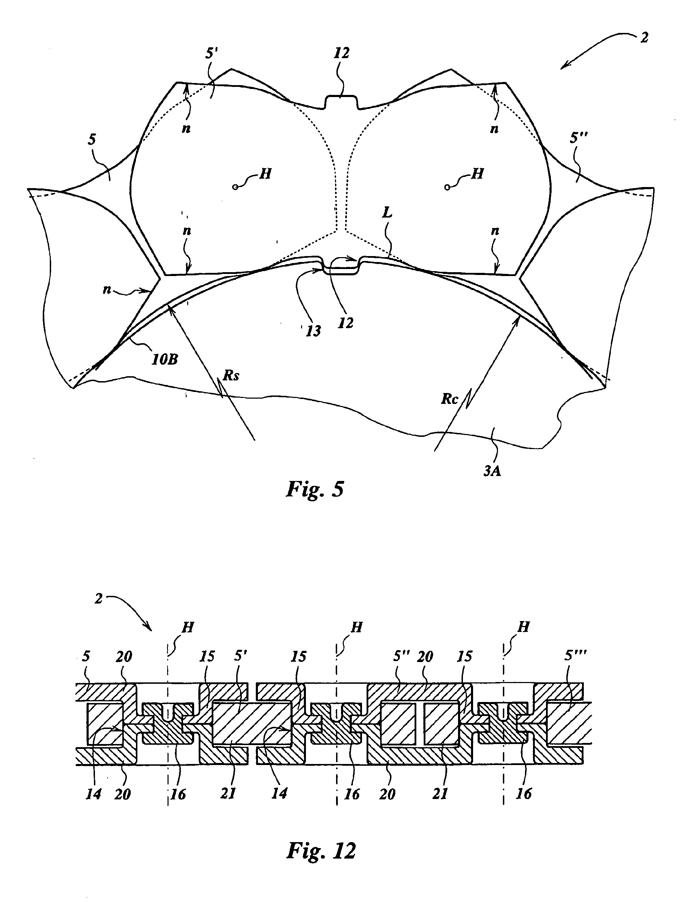

Figure 5 shows a chain 2 which is supported around a rotating guide 10B and has links 5, 5' and 5". The links 5 can be supported by means of the support surfaces n against the rotating guide 10B, while between the support surfaces n the long side L of the link 5 has a radius Rₛ which is smaller than the radius R_{c} of the support cylinder, so that the link 5 at that location does not rest against the rotating guide 10B and it is ensured that the ends of the link 5 rest against the rotating guide 10B by means of the support surfaces n. In the center of the long side L, the link 5 is provided with a tongue 12 which can come into engagement with a groove 13 in the rotating guide 10B. This tongue-groove coupling transmits force between the chain 2 and the wheel 3A. For correct operation, it is necessary for the groove to be present only at the location of the tongue 12 of the link plate of the inner link 5A or of the link plate of the outer link 5B, so that the support surfaces n of the earlier and subsequent links 5 present in the vicinity of the tongue 12 can be supported on the rotating guide 10B and do not fall in the groove 13. It is preferable for the wheel 3A to be composed of discs with a thickness which corresponds to the thickness of the link plates of the inner link 5A and/or of the outer link 5B, which are machined separately. It will be clear that the tongues could also be arranged on the rotating guide 10B, while the link 5 may then have a groove which interacts with the tongue. It must then be ensured that the support surfaces n always remain clear of the tongues. Figure 5 also shows that the links 5 are symmetrical, so that wheels can run on both sides of the chain 2. This means that there are four guide surfaces n. This option can be used for transmissions with a plurality of shafts around which the chain 2 has to be guided. This also enables the chain 2 to be reversed in order to achieve additional service life when it is worn out.

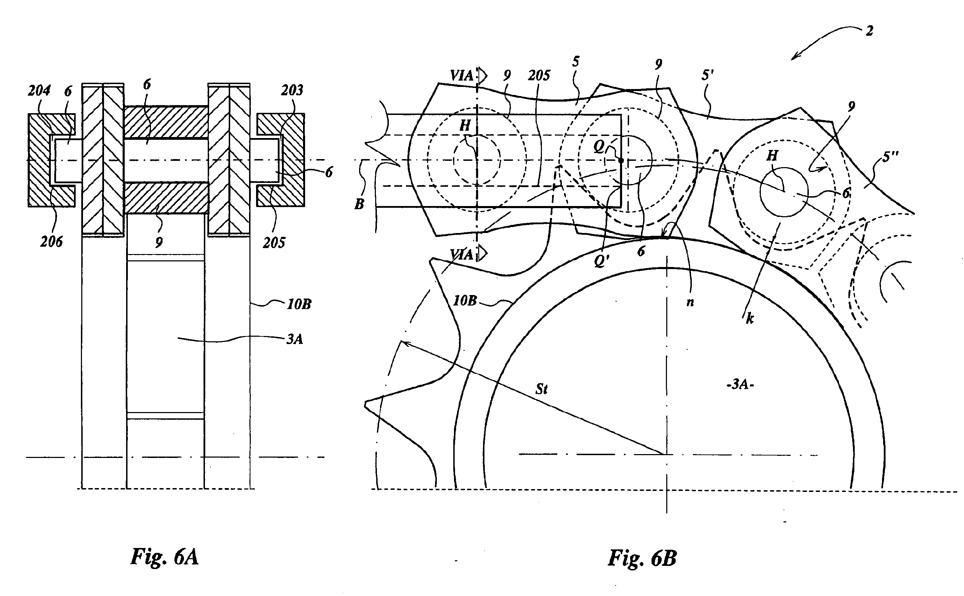

There are numerous ways in which the fixedly arranged first stationary part 10A of the guide can be designed. Figures 6 to 11 diagrammatically depict a number of examples. In the examples shown, the stationary part 10A of the guide is a straight section, the distance b always being very short, with the result that the curved path B more or less coincides with the connecting line r which is tangent to the circle arc St. There are also numerous other conceivable variations.

Referring now to Figures 6A and 6B, these figures respectively depict a diagrammatic cross section VIA-VIA through Figure 6B and a diagrammatic side view of an alternative embodiment of the fixedly arranged first, stationary part 10A of the guide of the chain transmission 1, the chain pins 6 being of lengthened design, in such a manner that the link plates of the chain 2 are enclosed. On one or both sides of the chain 2, the chain 2 is guided via a groove 203 and/or 204 in the housing, forming the fixedly arranged first part of the guide. In the figure, the groove 203/204 surrounds the pin 6 on two sides by means of the contours 205 and 206. Contour 205 or 206 may be omitted, depending on the design, of the chain transmission 1. The groove 203/204 continues as far as point Q, in such a manner that when the pin 6 leaves the groove 203/204, the support surface n is supported by the rotating guide 10B. As has already been stated, the path of the center axes H of the pivot axes of the chain 2 is determined only by the stationary guide 10A and the rotating guide 10B. The toothing of the sprocket wheel 3A does not contribute to this guide. This is expressly shown in Figure 6B, in that during the interaction between the chain 2 and the wheel 3A, the bush 9 is not supported by a tooth space, but rather by support surface n being supported against the rotating guide 10B. To transmit the force, the bush 9 rests against the tooth flank and there is a gap k between the bush 9 and the tooth space.

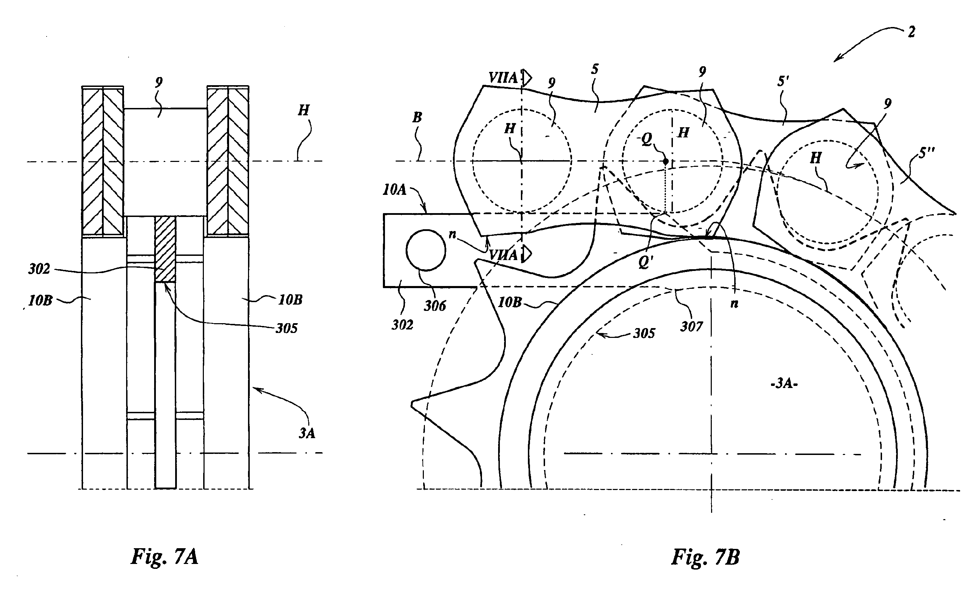

Figures 7A and 7B respectively show a cross section VIIA-VIIA through Figure 7B and a side view of an exemplary embodiment in which the bush 9 of a bush chain 2 having links 5, 5' and 5" is supported by the stationary guide 10A. There is a circular groove 305 in the sprocket wheel 3A, in which groove is located the first part of the guide, which is designed as straight guide 302. Bush 9 of the chain 2 is in this case supported by straight guide 302. For successful and accurate assembly, the straight guide is of U-shaped design, so that it is supported, in terms of its position, by the circular groove 305. The straight guide 302 can be mounted in a fixed position by means of a bolt 306. If appropriate, the straight guide 302 can be resiliently secured to groove 305 of the sprocket wheel 3A by means of tongue 307, preventing the straight guide 302 from becoming detached. There is then no need for a bolt 306. Obviously, in this solution it must be ensured that there is sufficient lubrication between the straight guide 302 and the sprocket wheel 3A.

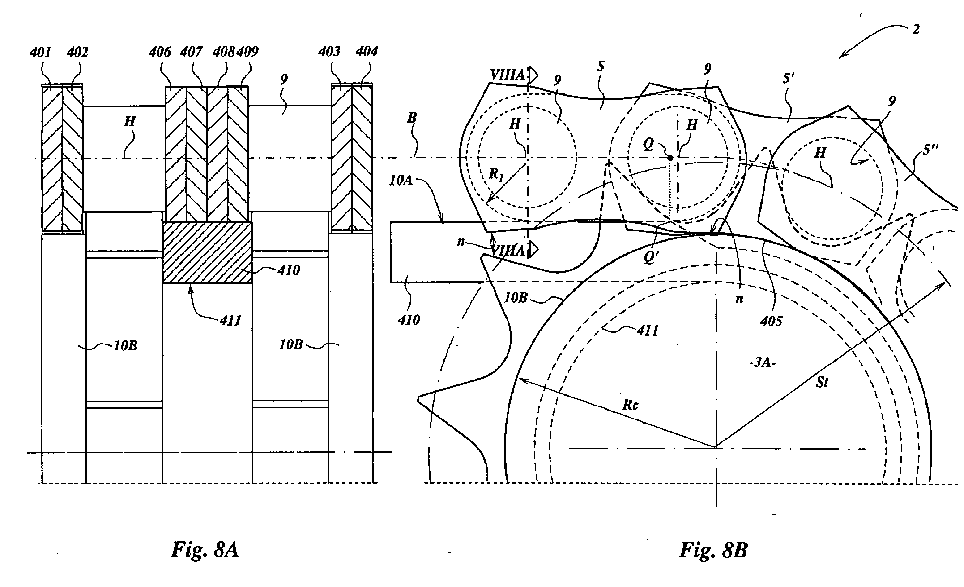

Figures 8A and 8B respectively show a cross section VIIIA-VIIIA through Figure 8B and a side view of an embodiment in which the chain 2 is designed as a duplex chain. This enables the strength of the chain to be increased considerably. The outer link plates of the links 5, which are denoted by reference numerals 401, 402, 403 and 404, are provided, on the long sides in the vicinity of the corners, with guide surfaces n, so that the links 5 can be supported against the rotating guide 10B. The inner link plates of the links 5, which are denoted by reference numerals 406, 407, 408 and 409, are preferably designed without guide surfaces n and have a contour circle with a radius R₁, which corresponds to the difference between the radius of the pitch circle St and the radius R_{c} of the support cylinder. The contour circles of these links are guided via the straight guide 410 which, by way of example, is of U-shaped design and is accurately positioned by the circular groove 411 formed in the sprocket wheel. The straight guide is effective up to point Q'.

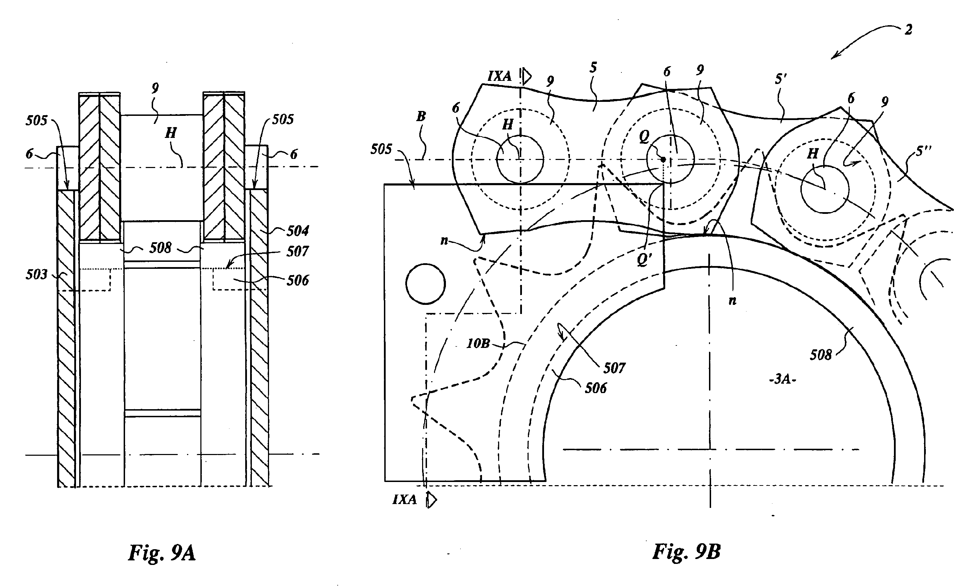

Figures 9A and 9B respectively show a cross section IXA-IXA through Figure 9B and a side view of an embodiment in which the chain 2 is guided by means of the lengthened pin 6 which slides over contour 505 of the fixedly arranged first part of the guide, which is designed as straight guide 503 and 504. The straight guide stops at point Q'. The straight guide 503 and 504 is designed as a plate which is secured to the housing by means of a bolt. For accurate positioning of the plate with respect to the sprocket wheel, in this case an annular support 506 has been selected, which is guided by the inner side 507 of a ring 508 of the cylindrical rotating guide 10B.

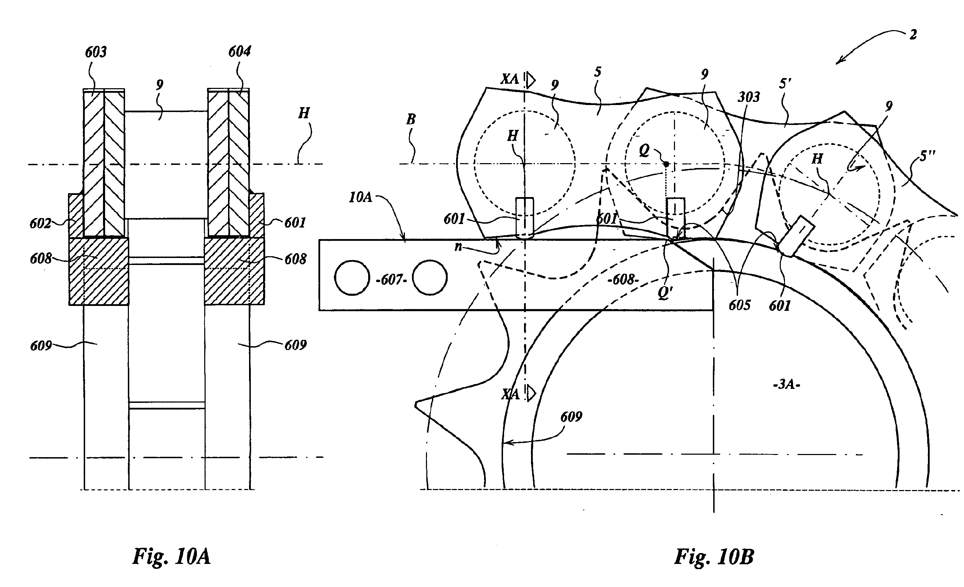

In figures 10A and 10B, the straight guide 10A has been realized by means of strips 601 and 602, which are fixedly secured to the outer link plates 603 and 604. At the bottom side, the strips are provided with a circular rounded section 605 with the center axis H as its center point. The strips slide over a contour of straight guide 607 which forms a stationary guide 10A and is effective up to point Q'. The straight guide can be secured by means of bolts. In this example, the straight guide is provided with a groove 608 in which the guide circle 609 runs.

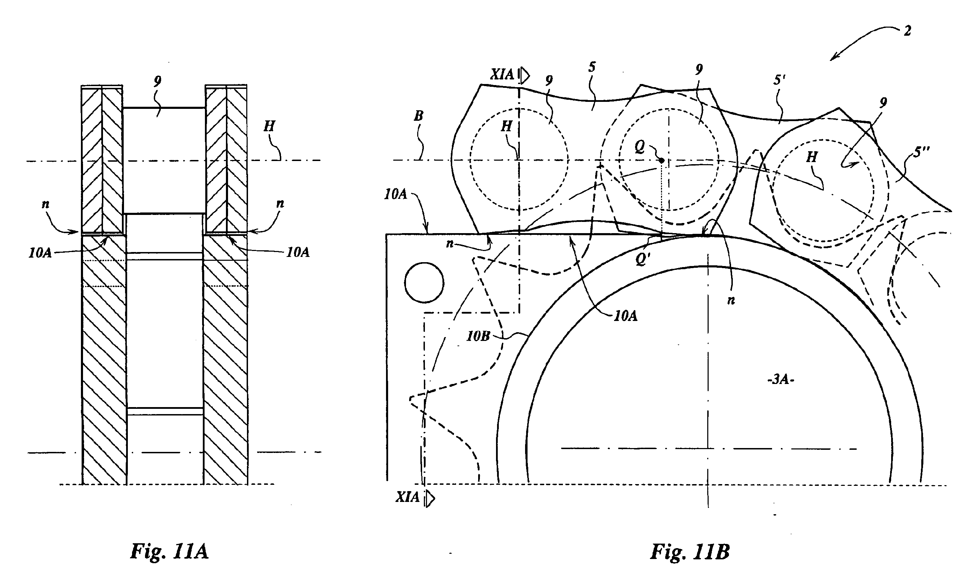

Figure 11 shows a side view illustrating that the fixedly arranged first part of the stationary guide 10A and the rotatably arranged second part 10B of the guide 10 directly adjoin one another, the stationary straight guide 10A ending beneath point Q. This embodiment has the significant advantage that it is of compact design in the axial direction. It should be noted that the fixedly arranged first part 10A of the guide 10 and the rotatably arranged second part 10B of the guide 10 can likewise adjoin one another at an angle or may even be positioned at a certain distance from one another in the running direction of the chain and/or transversely with respect thereto. Figure 12 shows a diagrammatic cross section through a chain without pins in accordance with the invention. The chain 2 is composed of links 5, 5', 5", etc., alternately comprising outer links 20 and inner links 21. Two holes 14 with center axes H are arranged in the inner links 21. The outer links 20 are made from plate material with a thickness which is approximately half the thickness of the inner links 21. Chipless deformation has been used to form cylindrical journals 15 with center axes H, which journals 15 fit accurately in the holes 14. The journals 15 are arranged in the holes 14 from either side and the outer links 20 are secured to one another, in this case by rivets 16. A simple chain 2 of this type is particularly suitable when using wheels without teeth, for example when the rotation of the wheels is coupled to the chain by means of tongues and grooves as described in Figure 5.

In addition to the use of the chain according to the invention shown above in a chain transmission as shown in Figure 1, the chain according to the invention can also be used when a chain is guided around a wheel with a small diameter, in which case the wheel is used only to transmit force and not to transmit any torque. One application is that of moving the fork of a forklift truck by means of a hydraulic cylinder, in which case the wheel is secured to the piston rod. The chain forms an arc of 180° around the wheel and one end is secured to the lifting mast and the other end to the fork which is to be moved. It is preferable for the chain which is provided with support surfaces in accordance with the invention, in the vicinity of the wheel, to slide along a stationary guide by means of the side of the link plates. In this arrangement, during movement of the piston rod the fork will move without shocks, even if the wheel has a small diameter compared to the pitch p, as is desired in view of the space available.

It should be noted that the invention is not restricted to the preferred embodiments described here. For example, the rotatable guide may be of a shape other than circular. It is also possible for the rotatably arranged second part to be provided with tongues, recesses or repeating arcs. In an embodiment of this type, the link plates of the links of the chain may if appropriate have a conventional octagonal or oval periphery.

Variants of this type will be clear to the person skilled in the art and are deemed to lie within the scope of the invention as represented in the claims which follow.

## Claims

1. A chain transmission, comprising a chain (2) with links (5) which are coupled to one another by means of hinge joints and can rotate with respect to one another about parallel pivot axes (H) which are at a constant spacing (p) from one another, a rotatable wheel (3A) in interaction with the chain with an axis of rotation which is parallel to the pivot axes, driver means for positioning the pivot axes with respect to the wheel in the direction of rotation and support means comprising support surfaces (n) which are present at the ends of the links (5), and a rotating support (10B), which interacts with the support surfaces and can rotate about an axis which is parallel to the axis of rotation, in such a manner that the distance between axis of rotation and the pivot axis (H) when a support surface is supported against the rotating support is variable, **characterized in that** the support means are suitable for guiding the pivot axes along a curved path (B) in such a manner that a pivot axis, at a certain distance from the wheel is always at a constant speed when the wheel is rotating at a constant speed,
the shape of the support surfaces being determined by the curved path (B) and the radius of the rotating support.

2. The chain transmission as claimed in claim 1, in which the rotating support (10B) comprises a cylindrical wall which rotates with the wheel (3A) and if appropriate rotates about the axis of rotation.

3. The chain transmission as claimed in claim 1 or 2, in which the support means comprise stationary guide means (10A) for guiding the link (5) before the front support surface (n) comes into contact and/or after the back support surface (n) has been in contact with the rotating support (10B).

4. The chain transmission as claimed in claim 3, in which the stationary guide means (10A), in the vicinity of the wheel (3A), guide the link (5) in a straight path.

5. The chain transmission as claimed in claim 3 or 4, in which the support means (10A, 10B) are designed in such a manner that the pivot axis (H), in the vicinity of the wheel (3A), can be supported simultaneously by the stationary guide means (10A) and the rotating support (10B).

6. The chain transmission as claimed in one of the preceding claims, in which the driver means comprise a tongue (12) and a groove (13), the tongue or the groove forming part of the outer periphery of a link (5) and being able to come into engagement with the groove or tongue, respectively, which is arranged on the cylindrical wall, which rotates about the axis of rotation, of the wheel (3A).

7. The chain transmission as claimed in claim 6, in which the tongue (12) or groove (13) which forms part of the link (5) is arranged centrally between the support surfaces (n).

8. The chain transmission as claimed in claim 6 or 7, in which the chain (2) is composed of a first link (5A) and a second link (5B) alternating with one another, and in which the tongue (12) or groove (13) is arranged on the first link (5A) or on the second link (5B).

9. The chain transmission as claimed in one of the preceding claims, in which the chain (2) is composed of a first link (5A) and a second link (5B) alternating with one another and the hinge is formed by a hole (14) in the link plate (21) of the first link and a journal (15) formed by deformation of the link plate or link plates (20) of the second link.

10. The chain transmission as claimed in one of the preceding claims in which the wheel acts only for transmitting a force and does not transmit any torque.

## Patentansprüche

1. Kettengetriebe, umfassend eine Kette (2) mit Gliedern (5), die mithilfe von Gelenkverbindungen aneinander gekuppelt sind und in Bezug zueinander um parallele Schwenkachsen (H) drehen können, welche sich in einem konstanten Abstand (p) voneinander befinden, ein drehbares Rad (3A) in Zusammenwirkung mit der Kette mit einer Drehachse, die parallel zu den Schwenkachsen ist, Antriebsmittel zum Positionieren der Schwenkachsen bezüglich des Rads in der Drehrichtung, und Stützmittel, die Stützflächen (n), welche an den Enden der Glieder (5) vorhanden sind, und eine Drehstütze (10b) umfassen, welche derart mit den Stützflächen zusammenwirkt und um eine Achse drehen kann, die parallel zu der Drehachse ist, dass der Abstand zwischen Drehachse und der Schwenkachse (H), wenn eine Stützfläche an der Drehstütze gestützt ist, veränderlich ist, **dadurch gekennzeichnet, dass** die Stützmittel derart zum Führen der Schwenkachse entlang eines gekrümmten Weg (B) geeignet sind, dass sich eine Schwenkachse, in einem bestimmten Abstand von dem Rad, stets auf einer konstanten Geschwindigkeit befindet, wenn das Rad mit einer konstanten Geschwindigkeit dreht, wobei die Form der Stützflächen durch den gekrümmten Weg (B) und den Radius der Drehstütze bestimmt ist.

2. Kettengetriebe nach Anspruch 1, wobei die Drehstütze (10B) eine zylindrische Wand umfasst, die mit dem Rad (3A) dreht und, wenn zweckmäßig, um die Drehachse dreht.

3. Kettengetriebe nach Anspruch 1 oder 2, wobei die Stützmittel ortsfeste Führungsmittel (10A) zum Führen des Glieds (5) umfassen, bevor die vordere Stützfläche (n) in Kontakt mit der Drehstütze (10B) kommt und/oder nachdem die hintere Stützfläche (n) mit der Drehstütze (10B) in Kontakt war.

4. Kettengetriebe nach Anspruch 3, wobei die ortsfesten Führungsmittel (10A) das Glied (5) in der Nähe des Rads (3A) in einem geraden Weg führen.

5. Kettengetriebe nach Anspruch 3 oder 4, wobei die Stützmittel (10A, 10B) derart gestaltet sind, dass die Schwenkachse (H) in der Nähe des Rads (3A) gleichzeitig durch die ortsfesten Führungsmittel (10A) und die Drehstütze (10B) gestützt sein kann.

6. Kettengetriebe nach einem der vorhergehenden Ansprüche, wobei die Antriebsmittel eine Zunge (12) und eine Nut (13) umfassen, wobei die Zunge oder die Nut ein Teil des Außenumfangs eines Glieds (5) bilden und imstande sind, in Eingriff mit der Nut bzw. Zunge zu treten, die an der zylindrischen Wand, welche um die Drehachse dreht, des Rads (3A) angeordnet ist.

7. Kettengetriebe nach Anspruch 6, wobei die Zunge (12) oder Nut (13), die ein Teil des Glieds (5) bildet, mittig zwischen den Stützflächen (n) angeordnet ist.

8. Kettengetriebe nach Anspruch 6 oder 7, wobei die Kette (2) aus einem ersten Glied (5A) und einem zweiten Glied (5B) gebildet ist, die miteinander abwechseln, und wobei die Zunge (12) oder Nut (13) an dem ersten Glied (5A) oder dem zweiten Glied (5B) angeordnet ist.

9. Kettengetriebe nach einem der vorhergehenden Ansprüche, wobei die Kette (2) aus einem ersten Glied (5A) und einem zweiten Glied (5B) gebildet ist, die miteinander abwechseln, und das Gelenk durch ein Loch (14) in der Kettenlasche (21) des ersten Glieds und einen Achszapfen (15) gebildet ist, der durch Verformung der Kettenlasche oder Kettenlaschen (20) des zweiten Glieds ausgebildet ist.

10. Kettengetriebe nach einem der vorhergehenden Ansprüche, wobei das Rad nur zum Übertragen einer Kraft wirkt und keinerlei Drehmoment überträgt.

## Revendications

1. Transmission par chaîne, comprenant une chaîne (2) pourvue de chaînons (5) qui sont accouplés les uns aux autres au moyen de points d'articulation et peuvent tourner, les uns par rapport aux autres, autour d'axes parallèles de pivotement (H) présentant un espacement mutuel constant (p) ; une roue rotative (3A) en interaction avec ladite chaîne, et offrant un axe de rotation qui est parallèle auxdits axes de pivotement ; des moyens d'entraînement conçus pour positionner lesdits axes de pivotement vis-à-vis de ladite roue dans le sens de rotation ; et des moyens de support comportant des surfaces de support (n), présentes aux extrémités desdits chaînons (5), et un support rotatif (10B) qui est en interaction avec lesdites surfaces de support et peut tourner autour d'un axe parallèle audit axe de rotation, de manière à pouvoir faire varier la distance comprise entre ledit axe de rotation et l'axe de pivotement (H) lorsqu'une surface de support est en appui contre ledit support rotatif, lesdits moyens étant aptes à guider lesdits axes de pivotement le long d'une trajectoire curviligne (B) de façon telle qu'un axe de pivotement, situé à une certaine distance de la roue, présente en permanence une vitesse constante lorsque ladite roue est en rotation à une vitesse constante, **caractérisée par le fait que** la forme desdites surfaces de support est déterminée par ladite trajectoire curviligne (B) et par le rayon dudit support rotatif.

2. Transmission par chaîne selon la revendication 1, dans laquelle le support rotatif (10B) comprend une paroi cylindrique qui tourne avec la roue (3A) et tourne, en situation adéquate, autour de l'axe de rotation.

3. Transmission par chaîne selon la revendication 1 ou 2, dans laquelle les moyens de support comprennent des moyens fixes de guidage (10A) conçus pour guider le chaînon (5) avant la venue en contact de la surface de support (n) antérieure et/ouaprès la venue en contact de la surface de support (n) postérieure, avec le support rotatif (10B).

4. Transmission par chaîne selon la revendication 3, dans laquelle les moyens fixes de guidage (10A) guident le chaînon (5) sur une trajectoire rectiligne à proximité de la roue (3A).

5. Transmission par chaîne selon la revendication 3 ou 4, dans laquelle les moyens de support (10A, 10B) sont agencés de telle sorte que l'axe de pivotement (H) puisse être simultanément supporté, à proximité de la roue (3A), par les moyens fixes de guidage (10A) et par le support rotatif (10B).

6. Transmission par chaîne selon l'une des revendications précédentes, dans laquelle les moyens d'entraînement comprennent une languette (12) et une rainure (13), ladite languette ou ladite rainure formant partie intégrante de la périphérie extérieure d'un chaînon (5), et étant apte à venir respectivement en prise avec la rainure ou avec la languette façonnée sur la paroi cylindrique de la roue (3A) qui tourne autour de l'axe de rotation.

7. Transmission par chaîne selon la revendication 6, dans laquelle la languette (12) ou la rainure (13), formant partie intégrante du chaînon (5), est façonnée centralement entre les surfaces de support (n).

8. Transmission par chaîne selon la revendication 6 ou 7, dans laquelle ladite chaîne (2) est composée d'un premier chaînon (5A) et d'un second chaînon (5B) en alternance réciproque ; et dans laquelle la languette (12) ou la rainure (13) est façonnée sur ledit premier chaînon (5A), ou sur ledit second chaînon (5B).

9. Transmission par chaîne selon l'une des revendications précédentes, dans laquelle ladite chaîne (2) est composée d'un premier chaînon (5A) et d'un second chaînon (5B) alternant l'un avec l'autre, et l'articulation est constituée d'un trou (14) pratiqué dans la plaquette (21) dudit premier chaînon, et d'un tourillon (15) obtenu par déformation de la plaquette ou des plaquettes (20) dudit second chaînon.

10. Transmission par chaîne selon l'une des revendications précédentes, dans laquelle la roue a uniquement pour action de transmettre une force, et ne répercute aucun couple.
